# EUROPEAN PATENT APPLICATION

(11) **EP 4 738 272 A1**
(43) Date of publication of application: **06.05.2026**
(21) Application number: 24210059.2
(22) Date of filing: 31.10.2024
(51) Int. Cl.: G06V 10/22, G06V 10/25, G06V 10/764, G06V 10/94, G06V 30/14, G06V 30/19

(54) **AUTOMATIC IDENTIFICATION OF REVIEWED IMAGE DATA**

(71) Applicant: Koninklijke Philips N.V., 5656 AG Eindhoven (NL)
(72) Inventor: GOTMAN, Shlomo, Eindhoven (NL)
(74) Representative: Philips Intellectual Property & Standards

(57) **Abstract**

A computer-implemented method performed within an image viewing and/or processing environment comprising the following steps:
- a recognition program (7) obtaining screen capture content of at least part of an image display of a first processing application (11) based on image data loaded into the first processing application;
- the recognition program (7) automatically attempting to retrieve identification information from the screen capture content based on at least one screen location of identification information from a library of screen locations (9);
- classifying the screen capture content as recognizable if identification information can be retrieved and, based on the retrieved identification information, the image data can be identified in a data storage of image data (5) the second application identification has access to or as non-recognizable if the library of screen locations (9) currently does not contain any screen locations and/or if no identification information can be retrieved;
- in case the screen capture content is classified as non-recognizable: the recognition program (7) performing a learning process to determine at least one screen location of identification information on the image display based on changes happening over time on the image display and/or based on user input and storing the at least one screen location of identification information in the library of screen locations (9);
- in case the screen capture content is classified as recognizable: providing the identification information to the second processing application (12).

## Description

### FIELD OF THE INVENTION

The invention relates to a computer-implemented method performed within an image viewing and/or processing environment, a corresponding computer program, and a corresponding image visualisation and/or processing computing system.

### BACKGROUND OF THE INVENTION

Clinical diagnostic reading of medical images is typically performed by a user on a visualization system such as a PACS (Picture Archiving and Communication System) or a similar system (for example an advanced visualization workstation). While providing basic common viewing capabilities, general visualization systems, such as PACS, often lack the ability for advanced visualization and processing techniques. In addition, they may not able to leverage proprietary, modality-vendor dependent information stored with the images, or proprietary image formats, like CT spectral bases images (SBI). Corresponding functionalities and/or further applications may, however, be provided by different, specific programs, e.g. programs provided by different vendors.

To provide these additional capabilities, a possible solution is to provide an add-on application, e.g. a processing application, for example in form of a software application that is running in the PACS environment (e.g., on a PACS workstation), as a client in the client-server architecture, or as a web page. Accordingly, there may be two different applications running in the same environment but as two different applications. However, the two different applications may in many cases not be capable of sharing any information, in particular in case the two applications are from two different vendors. It would, however, be desirable to enable such sharing of information. For example, sharing information between applications may allow a user to select a patient, an examination, and/or an image only once, as part of one application, and this information could be seamlessly used by another application, e.g. a processing application, within the same environment. This could help the user, such as a radiologist, to save time and improve workflow efficiency. Information about a patient, an examination, an image, etc. may also be referred to as "context" or "context information". Without context sharing, the user typically has to work separately with two applications, meaning to select the data separately.

One solution could be to provide a non-standard-interface, such as API or command URL, to provide the context to a processing application. However, since there is no widely accepted standard, i.e. the interface is non-standard, this typically requires integration of a processing application with each other application, in particular of different vendors, within the visualization environment separately. This context may be referred to as "tight integration" between applications. However, this approach is often not possible or very difficult to implement. It may take a lot of development time and typically requires adaptions of the integration each time any of the two applications is updated to a new version. Another approach could be to universally use only one uniform standard for all the applications, such as CCOW (Clinical Context Object Workgroup standard). However, a uniform standard that is used by all applications has not been established successfully so far and may be difficult or even impossible to establish in the future for various reasons.

In WO 2014/174461 A2, a method is proposed for sharing viewing context between visualization applications by capturing visual context displayed via a visualization application and identify a study based on the captured visual context. This method may provide good results. However, to provide the best results, the method typically involves complex calibration procedures for various screen layouts that have to be repeated with every change, such as an upgrade in the software.

It would therefore be desirable to find a more simple and practicable solution for the above-mentioned problems, in particular enabling a functional and easier to implement solution for context sharing in in diagnostic reading systems and third-party applications running thereon.

### OBJECT OF THE INVENTION

It is, therefore, an object of the invention to provide a method to better address the above-mentioned problems, in particular to enable an easier to implement and/or to use solution for sharing context information in medical image reading environments and/or between different applications.

### SUMMARY OF THE INVENTION

To better address this object, a method according to claim 1, a computer program according to claim 13, and a system according to claim 14 is provided. Advantageous embodiments are set out in the dependent claims. Any features, advantages or alternative embodiments described herein in relation to the claimed method are also applicable to the other claim categories and vice versa.

According to a first aspect, a computer-implemented method for performing within an image viewing and/or processing environment is provided. The environment comprises at least a first processing application being configured to at least partially display image data, a second processing application, and a recognition program having access to a library of screen locations of identification information and comprising or having access to a recognition algorithm that is configured to recognize identification information at a particular screen location, wherein the identification information is information suitable to identify the image data. The method comprises the following steps:
- the recognition program obtaining screen capture content of at least part of an image display of the first processing application, wherein the image display is based on image data at least partially loaded into the first processing application;
- the recognition program automatically attempting to retrieve identification information from the screen capture content based on at least one screen location of identification information from the library of screen locations and by applying the recognition algorithm;
- classifying the screen capture content
   - as recognizable if identification information can be retrieved and, based on the retrieved identification information, the image data can be identified in a data storage of image data the second application identification has access to or
   - as non-recognizable if the library of screen locations currently does not contain any screen locations and/or if no identification information can be retrieved;
- in case the screen capture content is classified as non-recognizable: the recognition program performing a learning process to determine at least one screen location of identification information on the image display based on changes happening over time on the image display and/or based on user input and storing the at least one screen location of identification information in the library of screen locations;
- in case the screen capture content is classified as recognizable: providing the identification information to the second processing application.

Advantageously, the method according to the invention allows to achieve a sharing of identification information without requiring software integration between the two applications, nor is compliance with some kind of uniform standard required. In particular, identification information, for example including proprietary information, may be identified based on what is displayed in a user interface, i.e. by screen capturing the image display of the user interface. Thus, the computer-implemented method may in particular be a method for providing identification information from a first application to another application.

The method is intended for performing within an image viewing and/or processing environment. Hence, in particular, the method may be performed within an image viewing and/or processing environment. The image viewing and/or processing environment comprises in particular an image archiving and communication system such as a PACS (Picture Archiving and Communication System). The image viewing and/or processing environment may be based on digital computing devices and/or digital networks. The image viewing and/or processing environment may comprise or have access to at least one data storage of image data. The image viewing and/or processing environment may comprise the library of screen locations of identification information. Alternatively, the environment may have access to the library of screen locations of identification information. The library is in particular a digital library. The library may be stored on a digital storage medium. The image viewing and/or processing environment may comprise at least one server that comprises or is connected to the at least one data storage of image data and/or to the library of screen locations of identification information. The image viewing and/or processing environment may be connected to other systems, such as to a Radiology Information System (RIS). For example, the image viewing and/or processing environment may be part of or accessible via a Workstation. The environment comprising at least a first processing application and a second processing application. The term processing application is to be interpreted broadly. It generally describes a computer program designed to process image data, in particular medical image data, in some way. Processing image data, may for example, comprise one or more of the following: retrieving the image data from a data storage, providing the image data for display on a screen, providing different image views of the image data, providing a digital user interface with the image data for, providing measurements of the image data and/or measurement tools for the image data, making calculations based on the image data, transforming the image data in some way, segmenting objects of interest, fusing image data, assisting in computer aided diagnosis based on the image data, performing quantitative analysis on the image data. The first processing application is configured to at least partially display image data. For example, the first processing application may display a part of an organ that is imaged with the image data. For example, the first processing application may display a slice of three-dimensional image data. Optionally, the second processing application is also configured to at least partially display image data. Hence, in particular, both, the first and the second processing application may be configured to at least partially display image data. The image data may, in particular be or comprise medical image data. Generally, whenever image data or images are mentioned within the context of this invention, the image data may in particular be medical image data and/or the image may in particular be a medical image. For example, the medical image data may comprise computed tomography image data, magnetic resonance image data, digital X-ray radiogrammetry, and/or AMI (Advanced Molecular Imaging).

Typically, processing applications display information about the image data on the user interface that is used by a user. Information about the image data is denoted identification information in the context of this information. In the context of this invention, in particular the first processing application displays identification information. Identification information is generally any information that is suitable to identify the image data. In particular, the identification information may comprise a number or name connected with the image data. For example, the identification information may comprise any one or several of an image number, a patient number, a patient name. Identification information may also be denoted as "context information", "context" or "screen context".

As part of the method according to the invention, the recognition program obtains screen capture content of at least part of an image display of the first processing application. For example, screen capture content may be a screenshot or part of a screenshot. For example, in some embodiments, only the upper part of the image display may be used. For example, the part of the image display to be used may be based on screen locations of the library of screen locations. The image display is based on image data at least partially loaded into the first processing application. For example, the image display may comprise a user interface showing a representation of the image data or of part of the image data and, additionally, at least some kind of identification information. The screen capture content may be taken directly by the recognition program, for example by making a screen capture of the currently displayed screen and/or the currently displayed user interface of the first processing application. Alternatively, the recognition program may receive the screen capture content. The screen capture content may be provided to the recognition program. For example, another program may take the screen capture content and provide and/or send it to the recognition program. Preferably, the step of obtaining the screen capture content may be initiated based on a user input. Optionally there may be an additional step, in particular before the step of obtaining the screen capture content, of receiving user input to initiate the second processing application to analyse image data currently running with the first processing application. Hence, for example, a user may be looking at image data of a patient with the first processing application and decide to require further analysis of the image data that cannot be provided by the processing application. In this case, the user may want to use a different and/or more powerful processing application. In the context of this invention the second processing application may be configured to provide additional and/or more processing and/or viewing tools than the first processing application. Typically, if the two processing applications are not integrated with each other, according to the state of the art, the user would have to manually start the second processing application and select the image data within the second processing application, since the second processing application cannot determine what image data is currently loaded into the first processing application. However, the method according to the invention provides a way of automatically determining what kind of image data is currently displayed by the first processing application without needing a specific software integration with the first processing application. For example, an input option may be offered to the user, such as a hotkey, the activation of which by the user will automatically start the method. For example, the user may press a button "load current image data with second processing application" to initiate the method.

The recognition program automatically attempts to retrieve identification information from the screen capture content by applying the recognition algorithm. This attempt is based on at least one screen location of identification information from the library of screen locations. For example, the recognition algorithm may be applied to a part of the screen capture content that is defined by the at least one screen location. The recognition algorithm may be a text recognition algorithm. The recognition algorithm may be an optical character recognition (OCR) algorithm and/or an algorithm comprising a neural network trained to recognize text and/or numbers. The recognition algorithm itself may be a recognition algorithm known in the state of the art. For example, the OCR "PaddleOCR" may be used.

It is possible that the library of screen locations does initially not contain any screen location. In this case it may be automatically determined that identification information cannot be retrieved at a stored screen location. Optionally, the library of screen locations may comprise exactly one location. The number of screen locations may vary, depending on how often the method according to the invention has been applied, in particular depending on how often the learning process has been applied. The library of screen locations may comprise multiple screen locations. For example, the library may comprise multiple screen locations for multiple types of identification information, in particular one screen location for one type of identification information. Each screen location may be mapped to a particular type of identification information. Mapping the screen locations to a type of identification information may allow to easily determine what kind of identification information has been retrieved at a particular screen location. Optionally, the library may only comprise screen locations for one first processing application. Optionally, the library may comprise screen locations for multiple first processing applications. Hence, the library may enable to retrieve identification information from different (first) processing applications.

The step of classifying may be performed by the recognition program. Alternatively, the classification may be performed by an additional classification program. The screen capture content is classified as recognizable if identification information can be retrieved and if, further, the image data can be identified in a data storage of image data the second application identification has access to. The data storage of image data the second application identification has access to may be the same data storage the first processing application uses or, alternatively, may be a different data storage. If the identification information cannot be identified in the data storage, that may mean, that the identification information is wrong, or, in particular when the second processing application accesses a different data storage than the first processing application, that the image data may simply be missing. Optionally, in this scenario additional steps may be taken to determine what to do. Alternatively, the recognition program may simply do nothing in this case or wait for another attempt to retrieve identification information. Alternatively, the recognition program may classify the screen capture content as non-recognizable also in case when the image data cannot be identified.

The screen capture content is classified as non-recognizable if the library of screen locations currently does not contain any screen locations and/or if no identification information can be retrieved. In this case the recognition program performs the learning process. Advantageously, a relatively simple way of initiating the recognition program with a new or updated first processing application may thus be provided automatically when the identification information may not yet be retrieved. The screen location of identification information as determined via the learning process is then stored in the library of screen locations. Hence, the stored screen location for the identification information can be used for future automatic retrieving of identification information. Optionally, the learning process may comprise repeating same or similar steps of the learning process a plurality of times. For example, changes happening on the image display may be tracked until a plurality of changes has been tracked. For example, user input may be recognized a plurality of times. Repeating the steps of the learning process may enable a more reliable determination of screen locations.

If the screen capture content is classified as recognizable, the identification information is provided to the second processing application. This may in particular typically be the case after the learning process has been applied at least once. Advantageously, the second processing application may thus receive the information which image data is to be processed and/or shown by the second processing application without needing a direct software integration between the two processing applications and without requiring a user to explicitly select the image data again in the second processing application.

Optionally an additional step may be provided: Based on the identification information, at least partially loading the corresponding image data from the data storage into the second processing application. The image data may be displayed in a user interface of the second processing application. Advantageously, the user may thus directly continue working on the image data with the second processing application.

According to an embodiment, the learning process is performed while the first processing application is running. In particular, the learning process may be performed while a user is working with the first processing application

According to an embodiment, the learning process comprises tracking changes on the image display that are due to user input and/or registering user input. In particular, the user input may be user input that is input by the user while the user is working with the first processing application. For example, a user switching between different sets of image data and/or selecting image data may be tracked to determine the identification information.

According to an embodiment, the learning process comprises:
- tracking a user input concerning a selection of image data,
- retrieving identification information from the selected image data, and
- searching for the identification information on the screen capture content via the recognition algorithm to locate the screen location of the corresponding identification information on the screen capture content.

Tracking the user's selection of image data and retrieving identification directly form the selected image data may allow to determine with good certainty what kind of identification information and/or what specific identification information belongs to the image data. For example, the identification information may be extracted from the metadata of the image data and/or from the file name of the image data. For example, at the beginning, when automatically retrieving the identification information does not work yet, in particular due to missing screen locations, the user may still have to manually select the image data for the second processing application. Tracking what the user selects and comparing it to the screen capture content from the first processing application, may enable a particularly reliable and quick way of learning the screen locations. The steps of the learning process according to this embodiment may be repeated a plurality of times. For example, the steps may be repeated 2 to 20 times, more preferably 2 to 10 times, most preferably 2 to 5 times. Advantageously, via this embodiment, the learning can be done during normal work of a user, in particular without requiring the user to perform or initiate some specific calibration procedure.

According to an embodiment, obtaining screen capture content comprises obtaining the screen capture content multiple times and/or continuously, wherein the learning process comprises analysing one or multiple sections of the screen capture content that are changing over time and determining that or whether the at least one screen location of identification information is within a changing section of the screen capture content. There may be a plurality of changing sections, meaning that there are multiple screen locations of identification information, in particular different types of identification information. For example, a background process program, e.g. a daemon, may be used to periodically analyse changing field and/or poll screen texts, in particular while a user reviews different image data. Text fields that stay fixed may be ignored. The idea is, that while a user is reviewing different image data, the corresponding different identification information will change with each different set of image data, while the same type of identification information will be displayed at the same screen location each time. For example, fixed fields with non-changing text may be titles, menus, or hospital name (assuming, the data were taken in the same hospital) etc. Advantageously, via this embodiment, the learning can be done during normal work of a user, in particular without requiring the user to perform, actively take part in, or initiate some specific calibration procedure.

According to an embodiment, the learning process comprises searching for the identification information via the recognition algorithm in the one or multiple changing sections of the screen capture content. Hence, in particular, the two previously described embodiments may be combined. Accordingly, after tracking the user input concerning a selection of image data and retrieving the identification information from the selected image data, the identification information may be searched for in one or multiple changing sections of the screen capture content. Advantageously, the area that needs to be searched can be more limited, which may lead to a quicker and more reliable process. Furthermore, the specific type of identification information may be connected to the screen location more easily.

According to an embodiment, at least during the learning process, the recognition program provides a user interface that allows a user the option to select identification information on the image display of the first processing application to input at least one identification information selection, wherein the identification information selection is received by the recognition program and, based on the identification information selection, the at least one screen location of identification information is determined by the recognition program. The selection may comprise selecting a screen area where the identification is located. Hence, the recognition program may be configured to provides a user interface that allows a user the option to select identification information on the image display of the first processing application to input at least one identification information selection, at least during the learning process. For example, this option may be offered as an alternative to the previously described, fully automatic embodiments. For example, if a user wants to speed up the learning process, this option may be advantageous. Furthermore, selecting the identification information directly on the screen may still be faster than having to select the image data within the second processing application. Thus, even during the learning process, the user workflow may be enhanced according to this embodiment. For example, a selection feature may be provided to the user to enable the user to mark the screen location. For example, the user may be given the option to draw a geometric figure, such as a rectangle. The corresponding user input may then be received and used to determine the screen location. For example, the user may be prompted to mark, for example draw a rectangle around a specific type of identification information, such as a patient name or a series name.

According to an embodiment, the learning process comprises searching for the identification information via the recognition algorithm in a user selected screen area.

According to an embodiment, the identification information comprises at least one or more of the following: a study number, an accession number, a series number, an image number, a slice location, a patient name, a patient identification number, a study date, a series label and/or description.

According to an embodiment, the image data comprises medical image data, in particular comprising at least one or more of the following: computed tomography image data, photon counting image data, spectral computed tomography image data, magnetic resonance image data, nuclear imaging data, positron emission tomography data, single photon emission computed tomography imaging data, ultrasound image data, digital pathology data, and/or digital X-ray radiogrammetry data.

According to an embodiment, the recognition program is further configured to recognize application identification information on the screen capture content for identifying the first processing application, wherein the screen locations in the library of screen locations are stored together with the corresponding application identification information. Thus, advantageously, different first processing applications may be distinguished allowing to reliably draw identification information from different processing applications. The method may comprise the step of the recognition program automatically attempting to retrieve the application identification and, based on the application identification recognize the first processing application.

According to an embodiment, classifying the screen capture content further comprises: classifying the screen capture content as non-findable if identification information can be retrieved and, based on the retrieved identification information, no image data can be identified in a data storage of image data the second application identification has access to, wherein, in case the screen capture content is classified as non-findable, a user prompt is output notifying a user that the image data is missing and/or asking the user to verify the identification information. Advantageously, a discrepancy between the retrieved identification information and the available image data may thus be acknowledged.

According to an embodiment, in case in case the screen capture content is classified as non-findable and/or in case a user input is received that verifies the identification information, a further data storage of image data the first processing application is retrieving its image data from is accessed, and image data corresponding to the identification information is located in the further data storage and, if located, transferred to the data storage the second application has access to and/or to the second processing application. Advantageously, this embodiment may allow to update the data storage of the second processing application to also comprise the image data, that was previously unavailable to the second processing application and available to the first processing application.

According to an embodiment, after storing the at least one screen location of identification information in the library of screen locations during the learning process, the method is applied again starting with the step of obtaining screen capture content or starting with the step of attempting to retrieve identification information. Hence, the learned screen locations may advantageously be used for future automatic identification of image data, in particular immediately after the learning process, either on the existing screen capture content or on following screen capture content.

According to another aspect of the invention, a computer program comprising a recognition program and instructions which, when the program is executed by a computer having installed thereon and/or having access to a first processing application and a second processing application, at least the first processing application, in particular both processing applications, being configured to at least partially display image data, and the computer having access to a library of screen locations, cause the computer to carry out the method as described herein, is provided. The instructions may comprise any of the method steps and their variants as described herein. The computer program may be stored on a data storage medium, in particular a non-volatile data storage medium. The storage medium may be any computer-readable storage medium. For example, the storage medium may be a solid-state storage medium or an optical storage medium. The storage medium may be a hard-drive, a solid-state-disk, a compact disk, a DVD, a flash storage an online server etc.

According to another aspect of the invention, an image visualisation and/or processing computing system is provided, the system comprising a processing unit and a computer-readable storage medium, in particular non-transient storage medium, having stored thereon a computer program as described herein and a first processing application and a second processing application, at least the first processing application, in particular both processing applications, being configured to at least partially display image data.

According to an embodiment, the computing system, comprises a data storage, in particular non-transient data storage, with a library of screen locations, in particular a library of screen locations of identification information. Alternatively or additionally, the system may have access to a data storage with a library of screen locations of identification information. The system may comprise at least one data storage of image and/or have access to at least one data storage of image data.

The features and advantages of different embodiments can be combined.

### BRIEF DESCRIPTION OF THE DRAWINGS

The invention shall now be illustrated with reference to the attached drawings, in which:
Fig. 1 shows an example of screen capture content of an image display of a first processing application according to an embodiment of the invention;
Fig. 2 shows a schematic describing an image visualisation and/or processing computing system according to an embodiment of the invention;
Fig. 3 shows a flow diagram of a method according to an embodiment of the invention;
Fig. 4 shows a flow diagram of a learning process of a method according to an embodiment of the invention;
Fig. 5 shows a flow diagram of a learning process of a method according to another embodiment of the invention;
Fig. 6 shows a flow diagram of a learning process of a method according to another embodiment of the invention; and
Fig. 7 shows a flow diagram of a learning process of a method according to another embodiment of the invention.

### DETAILED DESCRIPTION OF EMBODIMENTS

Throughout the figures, the same or corresponding features/elements of the various embodiments are designated with the same reference numbers.

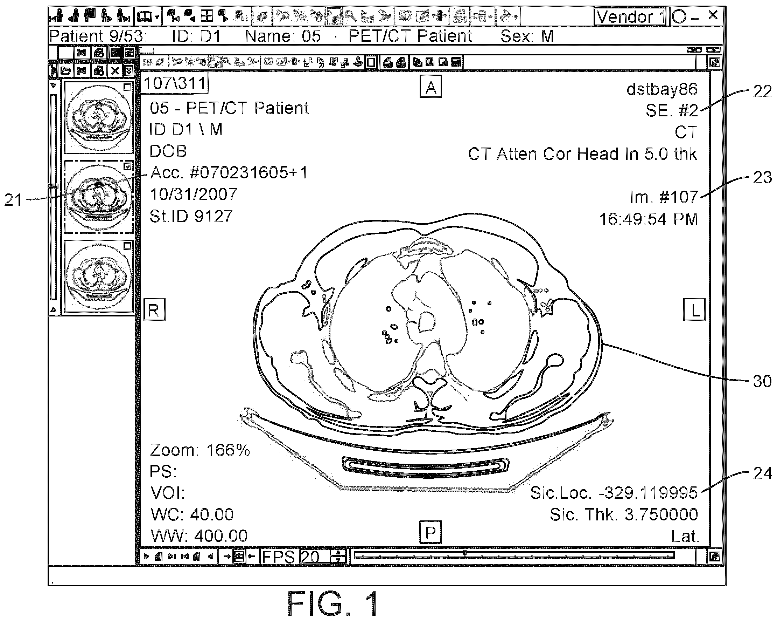

Fig. 1 shows an example of screen capture content of an image display of a first processing application 11 according to an embodiment of the invention. In this example the screen capture content comprises a screenshot of a user interface of the first processing application 11. The screen capture content displays medical image data 30 and multiple instances of identification information that can be used with a method according to this invention. In this example, the identification information comprises an accession number 21, a series number 22, an image number 23 and a slice location 24.

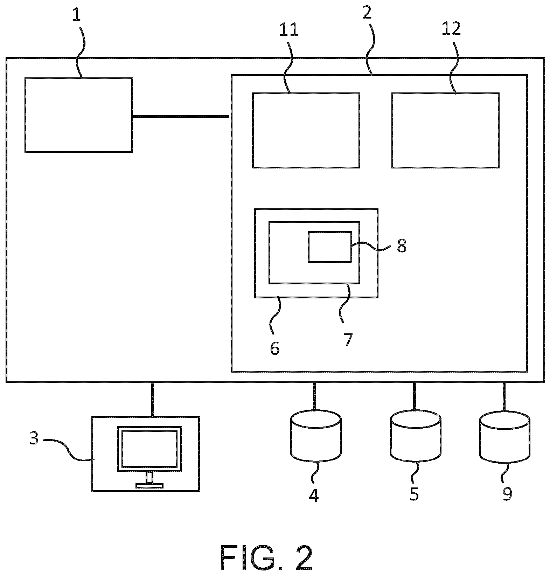

Fig. 2 shows a schematic describing an image visualisation and/or processing computing system according to an embodiment of the invention. The system comprises a processing unit 1 and a computer-readable storage medium 2. On the storage medium 2 are stored a first processing application 11 and a second processing application 12. The first processing application 11 is configured to at least partially display image data. For example, the image data may be displayed on a computer screen 3. Preferably, the second processing 12 application is also configured to display image data, e.g. on the computer screen 3. The first processing application 11 is configured to load the image data from a first data storage of image data 4. The second processing application 12 is configured to load image data from a second data storage of image data 5. The first data storage of image 4 and the second data storage of image data 5 may be part of the system or may be a remote data storage, e.g. a data server. Optionally, the first data storage of image data 4 and the second data storage of image data 5 may be identical, i.e. the first processing application 11 and the second processing application 12 may optionally load image data from the same data storage 4, 5. Both processing applications 11, 12 are typically configured to process image data to at least some extend. In particular, the second processing 12 application may have some processing or displaying functionality that the first processing application 11 does not provide. Hence, it may be desirable for a user, while working with the first processing application 11, to quickly switch to the second processing application 12 in order to access its additional functionality. In order to provide an efficient workflow for this process, the system comprises a computer program 6 with a recognition program 7 and instructions which, when the program is executed by the processing unit 1 causes the system to carry out a method according the invention. Embodiments of this method are described in the following with respect to the figures. The recognition program 7 has access to a library of screen locations 9 of identification information and comprises a recognition algorithm 8, such as OCR. Alternatively, the recognition program 7 may have access to a suitable remote recognition algorithm 8. For example, the recognition program 7 may access an online recognition algorithm 8. The recognition algorithm 8 is configured to recognize identification information at a particular screen location. In particular, the recognition algorithm 8 may be configured to recognize identification information in text form, such as letters or numbers. The library 9 may be part of the system or may be a remote library. Optionally, the recognition program 7 may be further configured to recognize application identification information on screen capture content for identifying the first processing application 11. The application identification information may be stored in the library of screen locations 9 together with the screen locations.

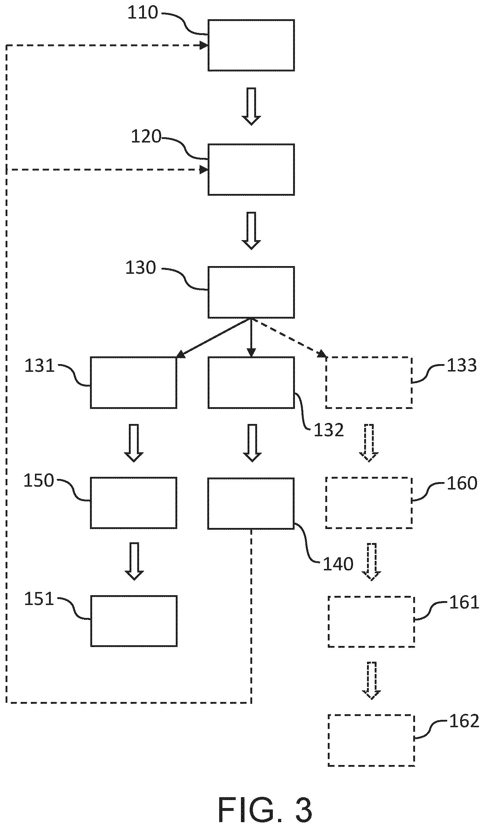

Fig. 3 shows a flow diagram of a computer-implemented method according to an embodiment of the invention. The method may be performed with a computing system as described with respect to Fig. 2 or with another suitable computing system. The method comprises the following steps: In a first step 110, a recognition program 7 obtains screen capture content of at least part of an image display of a first processing application 11. The image display is based on image data at least partially loaded into the first processing application 11. The screen capture content may in particular be a screenshot of at least part of an image display of the first processing application 11 that is currently reviewed by a user. In a further step 120, a recognition program 7 automatically attempts to retrieve identification information from the screen capture content based on at least one screen location of identification information from a library of screen locations 9 and by applying a recognition algorithm 8. In a further step 130 the screen capture content is classified. The screen capture content is classified as recognizable 131 if identification information can be retrieved and, based on the retrieved identification information, the image data can be identified in a data storage of image data 5 the second application identification has access to. The screen capture content is classified as non-recognizable 132 if the library of screen locations 9 currently does not contain any screen locations and/or if no identification information can be retrieved. Optionally, the screen capture content may further be classified as non-findable 133 if identification information can be retrieved and, based on the retrieved identification information, no image data can be identified in a data storage of image data 5 the second application identification has access to. In a further step 140, which is applied in case the screen capture content is classified as non-recognizable, the recognition program 7 performs a learning process to determine at least one screen location of identification information on the image display based on changes happening over time on the image display and/or based on user input and storing the at least one screen location of identification information in the library of screen locations 9. Optionally, after storing the at least one screen location of identification information in the library of screen locations 9 during the learning process, the method may be applied again starting with the step of obtaining screen capture content 110 or starting with the step of attempting to retrieve identification information 120. In particular, the learning process may thus be applied repeatedly to acquire more reliable screen locations and/or after the learning process has led to screen locations that are precise enough, the screen locations may be used for recognizing the identification information when repeating the method. In a further step 150, which is applied in case the screen capture content is classified as recognizable, the identification information is provided to the second processing application 12. After providing the identification to the second processing application 12, optionally, in a further step 151, based on the identification information, the corresponding image data may at least partially be loaded from the data storage 5 into the second processing application 12. In a further optional step 161, which is applied in case the screen capture content is classified as non-findable, a user prompt is output notifying a user that the image data is missing and/or asking the user to verify the identification information. If the optional steps 160, 161 are applied, optionally a further step 162 may be applied, wherein in case in case the screen capture content is classified as non-findable and/or in case a user input is received that verifies the identification information, a further data storage 4 of image data the first processing application 11 is retrieving its image data from is accessed, and image data corresponding to the identification information is located in the further data storage 4 and, if located, transferred to the data storage 5 the second application has access to and/or to the second processing application 12.

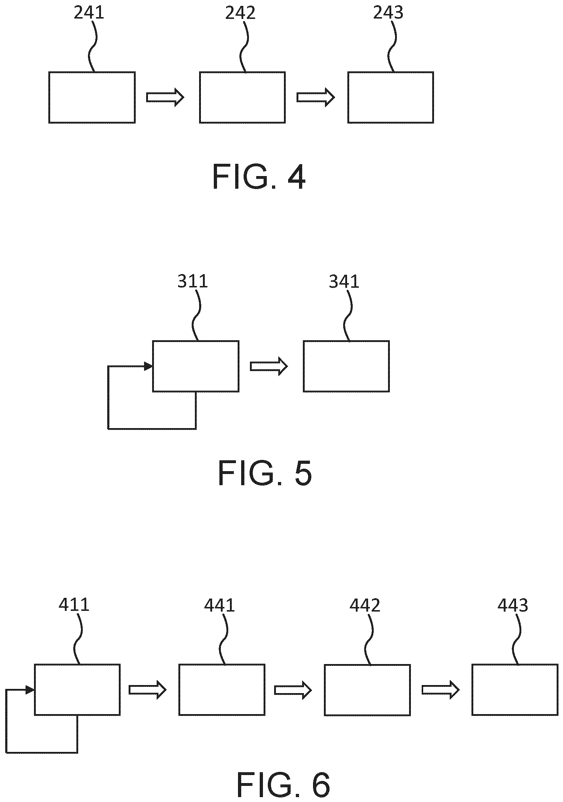

Fig. 4 shows a flow diagram of a learning process of a method according to an embodiment of the invention. In particular, the learning process according to this embodiment may be applied in step 140 of the method described with respect to Fig. 3. According to this embodiment, the learning process comprises a step 241 of tracking a user input concerning a selection of image data. In a further step 242 identification information is retrieved from the selected image data, for example from the metadata of the image data. In a further step 243, the identification information is searched on the screen capture content via the recognition algorithm 8 and, thus, the screen location of the corresponding identification information is located on the screen capture content.

Fig. 5 shows a flow diagram of a learning process of a method according to another embodiment of the invention. In particular, the learning process according to this embodiment may be applied in step 140 of the method described with respect to Fig. 3. First, a step of obtaining screen capture content 311 is applied multiple times and/or continuously. Further, in the step 341 of the learning process one or multiple sections of the screen capture content that are changing over time are analysed and it is determined that or whether the at least one screen location of identification information is within a changing section of the screen capture content. For example, text recognized within the changing sections may be analysed and it may be determined whether the text is or comprises identification information. For example, text recognized within the changing section may be analysed whether it fits a type of identification information (e.g. having the same number of digits and/or a same format etc.) and/or whether this identification information can be found in the metadata of a database o image data.

Fig. 6 shows a flow diagram of a learning process of a method according to another embodiment of the invention. In particular, the learning process according to this embodiment may be applied in step 140 of the method described with respect to Fig. 3. First, a step of obtaining screen capture content 411 is applied multiple times and/or continuously. In a further step 441 a user input concerning a selection of image data is tracked. In a further step 442 identification information is retrieved from the selected image data, for example from the metadata of the image data. In a further step 443, the identification information is searched in the one or multiple changing sections of the screen capture content via the recognition algorithm 8 and, thus, the screen location of the corresponding identification information is located on the screen capture content.

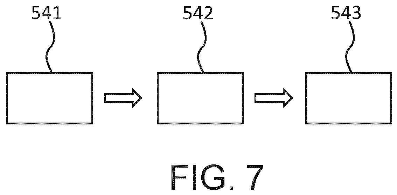

Fig. 7 shows a flow diagram of a learning process of a method according to another embodiment of the invention. In particular, the learning process according to this embodiment may be applied in step 140 of the method described with respect to Fig. 3. This embodiment may be used as an alternative to the embodiments shown in Figs. 4-6. This embodiment may be combined with the embodiments shown in Figs. 4-6. For example, this embodiment and the embodiment described with respect to Fig. 4 may be combined in a similar manner as the embodiments of Fig. 4 and Fig. 5 are combined in the embodiment of Fig. 6. In one step 541, the recognition program 7 provides a user interface that allows a user the option to select identification information on the image display of the first processing application 11 to input at least one identification information selection. In a further step 542, the identification information selection is received by the recognition program 7. In a further step 543, based on the identification information selection, the at least one screen location of identification information is determined by the recognition program 7.

The above-discussion is intended to be merely illustrative of the present system and should not be construed as limiting the appended claims to any particular embodiment or group of embodiments. Accordingly, the specification and drawings are to be regarded in an illustrative manner and are not intended to limit the scope of the appended claims. Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "an" or "a" does not exclude a plurality. A single processor or other unit may fulfil the functions of several items recited in the claims. The mere fact that certain measures are recited in mutually different dependent claims does not indicate that a combination of these measured cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

### REFERENCE SIGNS

- 1: processing unit
- 2: computer-readable storage medium
- 3: computer screen
- 4: first data storage of image data
- 5: second data storage of image data
- 6: computer program
- 7: recognition program
- 8: recognition algorithm
- 9: library of screen locations
- 11: first processing application
- 12: second processing application
- 30: medical image data
- 21: accession number
- 22: series number
- 23: image number
- 24: slice location

## Claims

1. A computer-implemented method for performing within an image viewing and/or processing environment, the environment comprising at least a first processing application (11) being configured to at least partially display image data, and a second processing application (12), and a recognition program (7) having access to a library of screen locations (9) of identification information and comprising or having access to a recognition algorithm (8) that is configured to recognize identification information at a particular screen location, wherein the identification information is information suitable to identify the image data, the method comprising the following steps:
- the recognition program (7) obtaining screen capture content of at least part of an image display of the first processing application (11), wherein the image display is based on image data at least partially loaded into the first processing application (11);
- the recognition program (7) automatically attempting to retrieve identification information from the screen capture content based on at least one screen location of identification information from the library of screen locations (9) and by applying the recognition algorithm (8);
- classifying the screen capture content
- as recognizable if identification information can be retrieved and, based on the retrieved identification information, the image data can be identified in a data storage of image data (5) the second application identification has access to or
- as non-recognizable if the library of screen locations (9) currently does not contain any screen locations and/or if no identification information can be retrieved;
- in case the screen capture content is classified as non-recognizable: the recognition program (7) performing a learning process to determine at least one screen location of identification information on the image display based on changes happening over time on the image display and/or based on user input and storing the at least one screen location of identification information in the library of screen locations (9);
- in case the screen capture content is classified as recognizable: providing the identification information to the second processing application (12).

2. The method according to claim 1,
wherein the learning process is performed while the first processing application (11) is running.

3. The method according to claim 2,
wherein the learning process comprises:
- tracking changes on the image display that are due to user input and/or registering user input.

4. The method according to any one of the preceding claims,
wherein the learning process comprises:
- tracking a user input concerning a selection of image data,
- retrieving identification information from the selected image data, and
- searching for the identification information on the screen capture content via the recognition algorithm (8) to locate the screen location of the corresponding identification information on the screen capture content.

5. The method according to any one of the preceding claims,
wherein obtaining screen capture content comprises obtaining the screen capture content multiple times and/or continuously,
wherein the learning process comprises analysing one or multiple sections of the screen capture content that are changing over time and determining that or whether the at least one screen location of identification information is within a changing section of the screen capture content.

6. The method according to claim 4 and 5,
wherein the learning process comprises searching for the identification information via the recognition algorithm (8) in the one or multiple changing sections of the screen capture content.

7. The method according to any one of the preceding claims,
wherein, at least during the learning process, the recognition program (7) provides a user interface that allows a user the option to select identification information on the image display of the first processing application (11) to input at least one identification information selection;
wherein the identification information selection is received by the recognition program (7) and, based on the identification information selection, the at least one screen location of identification information is determined by the recognition program (7).

8. The method according to any one of the preceding claims,
wherein the identification information comprises at least one or more of the following:
- a study number, an accession number (21), a series number (22), an image number (23), a slice location (24), a patient name, a patient identification number, a study date, a series label and/or description; and/or
- wherein the image data comprises medical image data (30), in particular comprising at least one or more of the following: computed tomography image data, photon counting image data, spectral computed tomography image data, magnetic resonance image data, nuclear imaging data, positron emission tomography data, single photon emission computed tomography imaging data, ultrasound image data, digital pathology data and/or digital X-ray radiogrammetry data.

9. The method according to any one of the preceding claims,
wherein the recognition program (7) is further configured to recognize application identification information on the screen capture content for identifying the first processing application (11), wherein the screen locations in the library of screen locations (9) are stored together with the corresponding application identification information.

10. The method according to any one of the preceding claims,
wherein classifying the screen capture content further comprises: classifying the screen capture content
as non-findable if identification information can be retrieved and, based on the retrieved identification information, no image data can be identified in a data storage of image data (5) the second application identification has access to;
wherein, in case the screen capture content is classified as non-findable, a user prompt is output notifying a user that the image data is missing and/or asking the user to verify the identification information.

11. The method according to claim 10,
wherein in case in case the screen capture content is classified as non-findable and/or in case a user input is received that verifies the identification information,
a further data storage (4) of image data the first processing application (11) is retrieving its image data from is accessed, and
image data corresponding to the identification information is located in the further data storage (4) and, if located, transferred to the data storage (5) the second application has access to and/or to the second processing application (12).

12. The method according to any one of the preceding claims, wherein, after storing the at least one screen location of identification information in the library of screen locations (9) during the learning process, the method is applied again starting with the step of obtaining screen capture content or starting with the step of attempting to retrieve identification information.

13. A computer program (6) comprising a recognition program (7) and instructions which, when the program is executed by a computer having installed thereon and/or having access to a first processing application (11) and a second processing application (12), at least the first processing application (11) being configured to at least partially display image data, and the computer having access to a library of screen locations (9), cause the computer to carry out the method according to any one of the preceding claims.

14. An image visualisation and/or processing computing system comprising a processing unit (1) and a computer-readable storage medium (2), in particular non-transient storage medium (2), having stored thereon a computer program (6) according to claim 13 and a first processing application (11) and a second processing application (12), at least the first processing application (11) being configured to at least partially display image data.

15. The computing system according to claim 14, comprising a data storage, in particular non-transient data storage, with a library of screen locations (9).
